(19) Europäisches Patentamt
European Patent Office
Office européen des brevets

(11) **EP 3 674 982 A1**

(12) **EUROPEAN PATENT APPLICATION**

(43) Date of publication:
**01.07.2020 Bulletin 2020/27**

(51) Int Cl.:
***G06N 3/04*** *(2006.01)*       ***G06N 3/063*** *(2006.01)*

(21) Application number: **18248028.5**

(22) Date of filing: **27.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **IMEC vzw
3001 Leuven (BE)**

(72) Inventors:
• **CONSTANTIN, Jeremy**
  **3001 Leuven (BE)**
• **RAGHAVAN, Praveen**
  **3001 Leuven (BE)**
• **RODOPOULOS, Dimitrios**
  **3001 Leuven (BE)**
• **DEBACKER, Peter**
  **3001 Leuven (BE)**

(74) Representative: **DenK iP
Hundelgemsesteenweg 1116
9820 Merelbeke (BE)**

(54) **HARDWARE ACCELERATOR ARCHITECTURE FOR CONVOLUTIONAL NEURAL NETWORK**

(57)     A hardware accelerator architecture (10) for a convolutional neural network comprises a first memory (11) for storing NxM activation inputs of an input tensor; a plurality of processor units (12) each comprising a plurality of Multiply ACcumulate (MAC) arrays (13) and a filter weights memory (14) associated with and common to the plurality of MAC arrays of one processor unit (12). Each MAC array is adapted for receiving a predetermined fraction (FxF) of the NxM activation inputs from the first memory, and filter weights from the associated filter weights memory (14). Each MAC array is adapted for subsequently, during different cycles, computing and storing different partial sums, while reusing the received filter weights, such that every MAC array computes multiple parts of columns of an output tensor, multiplexed in time. Each MAC array further comprises a plurality of accumulators (18) for making a plurality of full sums from the partial sums made at subsequent cycles.

*FIG. 3*

## Description

### Field of the invention

The present invention relates to energy-efficient hardware architectures for machine learning applications, more particularly to ultra-low-power neural network hardware. Such low-power architectures may in particular be used in portable and embedded systems implementing neural network inference.

### Background of the invention

Portable and embedded systems come with stringent limitations on energy consumption, requiring low-power implementations of architectures.

State-of-the-art neural network (NN) topologies, e.g. for vision applications, are convolutional neural networks (CNNs).

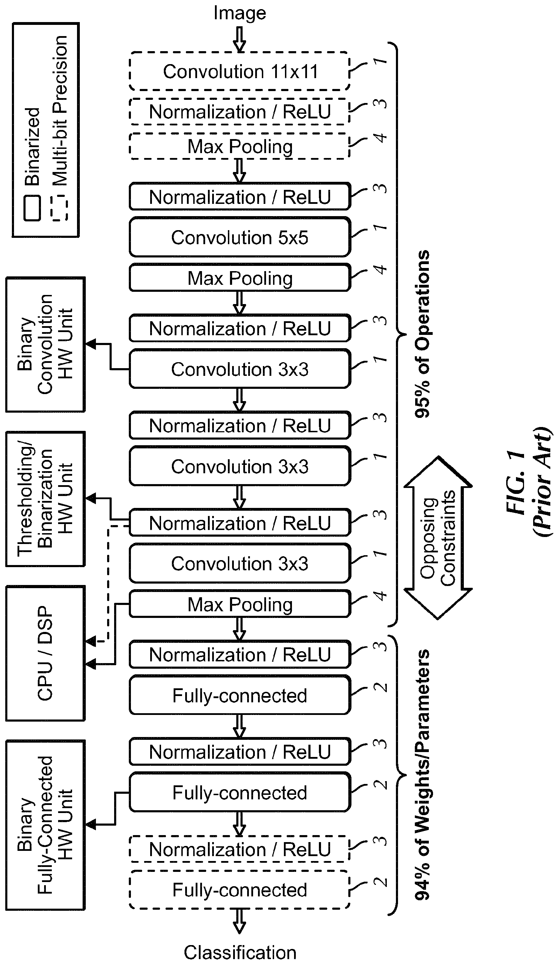

As a representative example, for highlighting the algorithm structure and NN topology of CNNs, FIG. 1 shows the NN topology of AlexNet (A. Krizhevsky et al., ImageNet Classification with Deep Convolutional Neural Networks, NIPS 2012), a common CNN used for image classification. This CNN achieves good performance on the ImageNet dataset with a Top5 test-accuracy of 84.7%. The CNN consists of five convolutional layers 1 (with varying filter sizes) followed by three fully-connected layers 2. In-between these two main types of layer operations other operations such as normalization 3 and pooling 4 are performed on the tensors flowing through the NN. The common core operation of convolutional and fully-connected layers is a multiply-accumulate operation (the dot product) of weights and activations: $\sum_i^n w_i x_i$. Although both convolutional layers 1 and fully-connected layers 2 share the same core multiply-accumulate operation, they exhibit two different properties: In AlexNet the convolutional layers make up 95% of all compute operations (2.2G) of on forward pass of the NN topology, while on the other hand 94% of the model weights / parameters (58M) are found in the fully-connected layers. This creates opposing constraints regarding the implementation of these NN layers; while a hardware architecture supporting convolutional layers requires high compute throughput realized through logic, at the same time a hardware architecture supporting fully-connected layers is dominated by the available on-chip memory and its throughput.

Thus, the processing of a fully-connected NN layer is memory dominated, since the task is to compute y = Wx, where x is an input (neuron) activation vector with $C_i$ entries, y is an output (neuron) activation vector with $C_o$ entries, and W is the $C_o$x$C_i$ weight matrix. Every activation $x_i$ that is fetched can be reused $C_o$ times (as input for $C_o$ different results / rows). However, every fetched weight $w_{i,j}$ is unique to the specific sum it belongs to, and cannot be reused. As a consequence, it is necessary to fetch one weight for each multiply-accumulate (MAC) operation that is performed.

The processing of a convolutional NN layer is compute dominated. There is a low data reuse, and no filter/weigh reuse.

### Summary of the invention

It is an object of embodiments of the present invention to provide deep learning architectures for neural network inference, with a low-power implementation.

The above objective is accomplished by a device and method in accordance with the present invention.

In a first aspect, the present invention provides a hardware accelerator architecture for a convolutional neural network, in particular embodiments for a binary neural network. The hardware accelerator comprises:

a first memory for storing NxM activation inputs of an input tensor,
a plurality of processor units each comprising a plurality of Multiply ACcumulate (MAC) arrays and
a filter weights memory associated with and common to the plurality of MAC arrays of one processor unit.

In accordance with the present invention, each MAC array is adapted for receiving a predetermined fraction (FxF) of the NxM activation inputs from the first memory, and filter weights from the associated filter weights memory. Each MAC array is adapted for subsequently, during different cycles, computing and storing different partial sums, while reusing the received filter weights, such that every MAC array computes multiple parts of columns of an output tensor, multiplexed in time. The multiplexing in time corresponds to the calculation of partial sums during different cycles. Each MAC array further comprises a plurality of accumulators for making a plurality of full sums from the partial sums made at subsequent cycles.

It is an advantage of the present invention that the full sum is calculated over different cycles. Every cycle a different partial sum is calculated. This way, no reloading of the weights, nor reloading nor shuffling around of partial sums is required. No logic is present nor needed to sum different partial sums together. The full sum is made or formed over time, not by actually adding up previously generated partial sums.

In the hardware accelerator architecture according to embodiments of the present invention, parallelism takes place both in space, and in time. In space: the plurality of MAC arrays serve a plurality of output tensor columns. In time: a plurality of accumulator registers serve a plurality of rows in the output tensor.

Each MAC array is adapted for calculating exactly one column of the output tensor.

In every subsequent cycle, FxF input activations are multiplied by the (reused) filter weights of the plurality of MACs in a MAC array, and are accumulated in a partial sum (stored in a partial accumulation register),

In every subsequent cycle, one partial sum for one element in the row of the output tensor column is calculated and updated in a switchable accumulator register. This way, multiple full sums are made over time, each in their own switchable accumulator register.

After a pre-determined number, e.g. 8, of compute cycles, a new set of weights is loaded (which means that no more weight reuse is possible) to continue calculation using the other input channels to further update the partial sums.

In an accelerator architecture according to embodiments of the present invention, the first memory may be shared between the plurality of processor units. This advantageously allows reuse of activation inputs.

In an accelerator architecture according to embodiments of the present invention, the first memory may be divided into L lanes of activation inputs, each lane determining a predetermined and unique fraction (FxF) of the NxM activation inputs. Each MAC array of a processor unit may be adapted for processing the activation data of one lane. The processing units are thus configured for each receiving a different set of activation signals from the first memory. Multiple overlapping windows of pixels are provided to serve the L lanes. This leads to spatial activation input reuse.

In particular embodiments of the present invention, the predetermined fraction (FxF) of the NxM activation units may equal 3x3 or 5x5. The present invention, however, is not limited to these values, and also other common sizes used in networks, or even uncommon sizes, may be used such as for instance 7x7 or 11x11 or 1x1. The use of 3x3 and 5x5 fractions has the particular advantage that it allows to balance both sizes at the same time, on the same hardware.

In the accelerator architecture according to embodiments of the present invention, each MAC array in a processor unit can be individually enabled. This supports different input mappings, e.g. when 5x5 filters are used, less MAC arrays are required than when 3x3 filters are used. If sufficient MAC arrays are provided to deal with the 3x3 filtered case, some of these MAC arrays can be disabled when working in a 5x5 filter configuration.

In the accelerator architecture according to embodiments of the present invention, the filter weights memory of a processor unit may be configured for storing filter weights which belong to a selected set of output channels processed by that processor unit. The number of output channels is determined by the depth of the tensor. By configuring the filter weights memory this way, per memory fetch from this filter weights memory a set of filter weights may be loaded, serving multiple output channels. The set of filter weights may be reused between all L lanes of activation inputs.

In an accelerator architecture according to embodiments of the present invention, a MAC array may comprise a plurality of parallel MAC units, each for calculating one of the different partial sums. This calculation is done using the same shared activation inputs, thus providing a further level of parallelism in space.

In particular embodiments, the number of parallel MAC units is adapted to be depending on the size of the predetermined fraction (FxF) of the activation inputs in the calculation of the partial sums.

For example, 25 parallel MAC units per Mac array serve an output tensor with depth 25.

If, for instance, 225 filter weights correspond to a set of 3x3 filters belonging to 25 different output channels, the MAC arrays are configured to have 25 parallel MAC units which calculate 25 different sums in parallel; but if the 225 filter weights correspond to a set of 5x5 filters belonging to 9 different output channels, the MAC arrays are configured to have 9 parallel MAC units which calculate 9 different sums in parallel. The MAC array supports 3x3 and 5x5 mode with re-use of same hardware.

In an accelerator architecture according to embodiments of the present invention, a MAC unit may comprise a multiplication unit for performing multiplication of activation inputs with filter weights. For a binary neural network, the multiplication unit of a MAC unit may comprise XNOR gates for performing piece-wise binary multiplication of activation inputs with filter weights.

In an accelerator architecture according to such embodiments of the present invention, a MAC unit may further comprise an adder for adding multiple inputs of the multiplication. For a binary neural network, the adder of the MAC unit may be implemented as a circuit for counting the number of ones in the multiplication result (thus for counting the number of ones coming out of the XNOR gates), for example a circuit comprising an adder tree. This counting of oneds can be done sequentially, but then the XNOR outputs need to be stored, which requires more cycles, or in parallel, which is the preferred solution.

The implementation for a binary neural network, with XNOR gates and population counter, allows the implementation to be extremely small and efficient.

In an accelerator architecture according to embodiments of the present invention, the accumulators may be configured for holding a running sum of their partial sums made at the subsequent cycles.

In a second aspect, the present invention provides a method for operating an accelerator architecture of a convolutional neural network according to any of the embodiments of the first aspect. The method comprises

(a) fetching a first number of filter weights from a filter weights memory,
(b) fetching a second number (FxF) of data elements from a first memory storing activation inputs of an input map, the second number being smaller than the first number,
(c) computing and storing, in the first MAC array, different partial sums, at subsequent cycles, by convoluting the second number of data elements with different subsets of the first number of filter weights, so as to compute multiple parts of columns of an output tensor, multiplexed in time, and

(d) accumulating the different partial sums made at subsequent cycles, to form a full sum.

In practice, there is shared control logic across all MAC arrays that share the first memory or a filter weights memory. Data is read from these two memories, and this read out data is broadcasted to but not stored in the MAC arrays, which do not have any storage means such as registers for that purpose.

A method according to embodiments of the present invention may furthermore comprise iterating steps (b) to (d) a plurality of times, wherein loading a second number of data elements includes loading different sets of activation inputs. Preferably, this loading of sets of activation inputs may be repeated as many times as there are input channels. Fileter weights may be reused.

A method according to embodiments of the present invention may furthermore comprise reading out, after the plurality of iterations, results of the accumulating operations.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 illustrates a data flow graph of the the prior art AlexNet topology of a CNN, and mapping to hardware units.
FIG. 2 illustrates a convolutional layer and the terminology used. This drawing is taken from V. Sze, Y. Chen, T. Yang and J. S. Emer, "Efficient Processing of Deep Neural Networks: A Tutorial and Survey," in Proceedings of the IEEE, vol. 105, no. 12, pp. 2295-2329, Dec. 2017.
FIG. 3 illustrates a hardware accelerator architecture for a convolutional neural network in accordance with embodiments of the present invention.

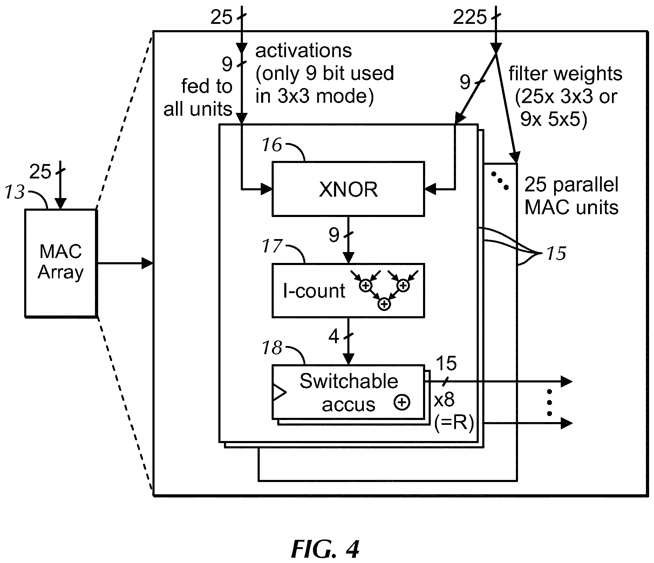

FIG. 4 illustrates more details of a MAC array which may be used in an embodiment of the present invention, wherein the CNN is implemented as a BNN.
FIG. 5 illustrates in a basic bloc-schematic diagram an architecture in accordance with embodiments of the present invention.
FIG. 6 illustrates a MAC unit configured for the particular implementation of 25 x 3x3 filters, or 9 x 5x5 filters.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

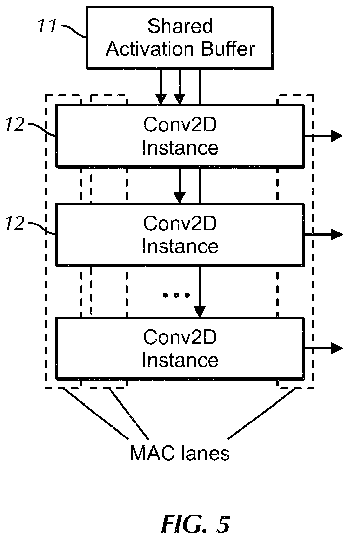

Convolutional neural networks (CNN) are neural networks comprising many stacked layers, at least one of which convolutional, meaning that an input-to-output tensor of that layer involves the mathematical convolution operation. Usually a convolutional neural network comprises more than just one convolutional layer, e.g. it may have five or more convolutional layers. A bloc-schematic diagram of a convolutional neural network in accordance with embodiments of the present invention comprising a plurality I of convolutional instances is illustrated in FIG. 5.

As stated above, it is a goal of embodiments of the present invention to decrease the computing cost in the processing of convolutional NN layers. More particularly, the present invention provides a solution for decreasing the accumulation energy cost.

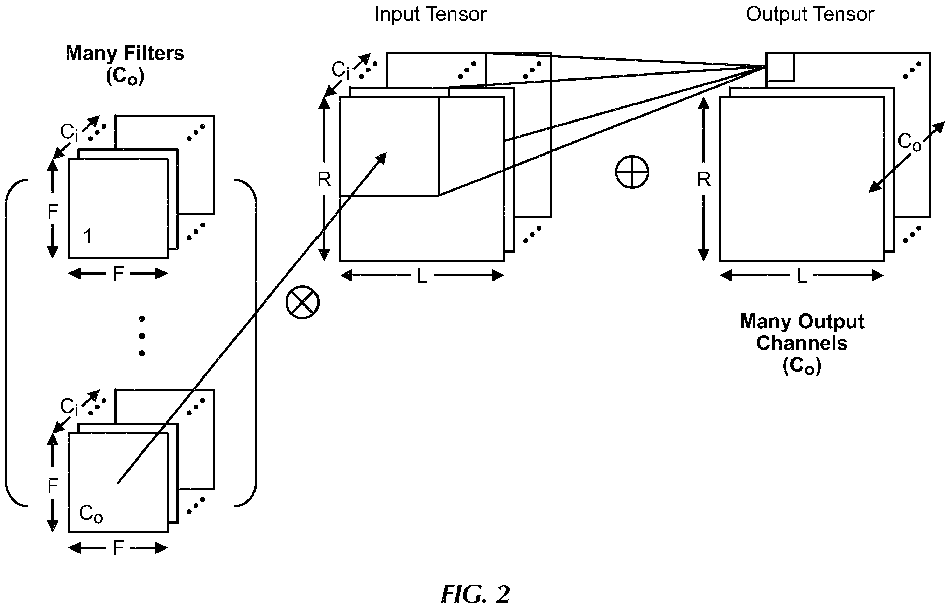

A convolutional layer is represented schematically in FIG. 2. A convolutional layer maps an input tensor onto an output tensor, by convolving the input tensor (activations) with a filter set (weights). The input tensor comprises $C_i$ input channels, and the output tensor comprises $C_o$ output channels. The input tensor comprises R rows and L columns of activations, and for ease of explanation, it is assumed that also the output tensor comprises R rows and L columns of activations. This holds if a stride 1 is used, and padding is added. However, in general, the present invention is not limited to embodiments where the size of the input tensor equals the size of the output tensor.

The filters used in the convolution have a size FxF. The filter size may typically be 3x3 of 5x5, which are commonly used filter sizes. The present invention, however, is not limited to these filter sizes.

With an input tensor size of $RxLxC_i$ and an output tensor size of $RxLxC_o$ (given correct padding according to the filter size and stride of 1), for each pixel in the output tensor, F*F*Ci MAC operations are required. The total number of filter weights for a convolutional layer is $F*F*C_i*C_o$. Each activation can be reused $F*F*C_o$ times, to contribute to FxF different output pixels over all $C_o$ output channels. Each filter weight can be reused R*L times, which corresponds to striding of the filter in both horizontal and vertical direction over an input channel with map size RxL (+ padding). In case of perfect reuse one weight fetch per R*L MAC operations is sufficient, which stands in contrast to the significantly more memory-heavy 1:1 ratio of the fully-connected case.

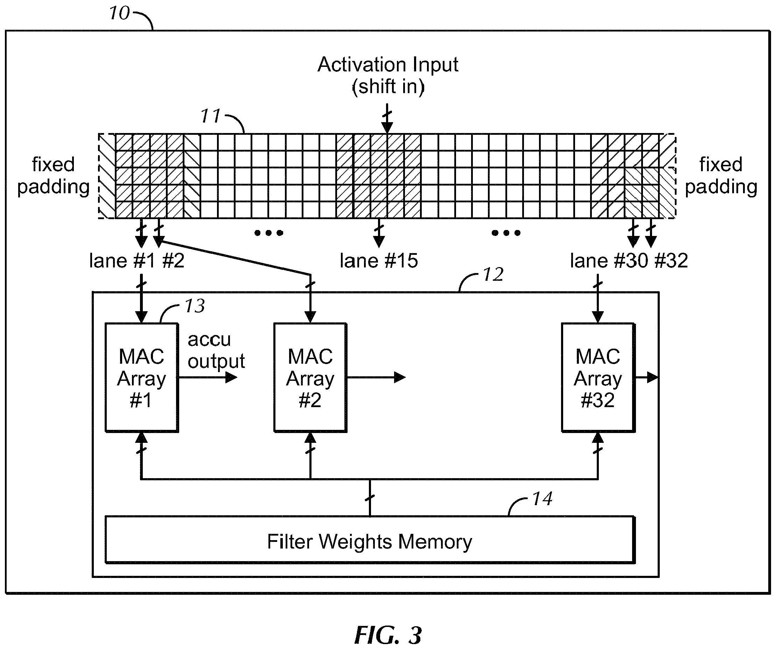

In order to obtain this, in a first aspect, the present invention provides a hardware accelerator architecture 10 for a convolutional neural network, as illustrated in FIG. 3. The hardware accelerator 10 comprises a first memory 11 for storing NxM activation inputs of an input tensor; and a plurality of processor units 12 - only one being illustrated in FIG. 3. However, every convolutional 2D instance as illustrated in FIG. 5 comprises a processor unit 12 as illustrated in FIG. 3. The first memory 11 is shared between the plurality of processor units 12, and thus between the plurality of convolutional 2D instances in the CNN. By connecting multiple convolution instances to the same first memory 11, activation reuse is increased ($C_o$ parallelism).

The shared first memory 11 is used to hold part of the input tensor. The first memory 11 may advantageously have a width equal to the width L of the input tensor, plus on top thereof a required or desired number of padding pixels, depending on the application. In alternative embodiments, the first memory 11 may be larger than the width L of the input tensor, in which case there are unused memory cells. In yet alternative embodiments, the first memory 11 may be smaller than the width L of the input tensor, in which case the input tensor needs to be split and processed in sub-blocks. The memory 11 has a height which is at least equal to the height of the largest filter kernel that will be used. Specifically in the example illustrated in FIG. 3, the first memory 11 can hold 5 rows (hence is to be used with a filter kernel not larger than 5x5), with 32+2 pixels per row (32 activation inputs and 2 padding pixels). The memory 11 can be larger to hold multiple filters, which do not all need to be used at the same time. Kernels for multiple layers can for example be stored if the memory is large enough. They do not need to be used all at the same time, as the accelerator processes layer by layer. Likewise, if for a single layer more than nine 5x5 filters or more than twenty five 3x3 filters are needed, multiple ones of the same can be stored in the memory if it is higher.

Each processor unit 12 of the hardware accelerator 10 comprises a plurality of multiply-accumulate (MAC) arrays 13 and a filter weights memory 14 associated with and common to the plurality of MAC arrays of that processor unit 12.

Each MAC array 13 of a processor unit 12 is adapted for receiving a predetermined number $F_{min}xF_{min}xNPMU$ filter weights from the associated filter weights memory 14, as well as a predetermined fraction of FxF of the NxM activation inputs from the first memory 11. In practice, registers of the MAC array are adapted to load $F_{max}xF_{max}$ activation inputs, but a more limited number may be effectively used, depending on the filter kernel size. In the present disclosure, FxF is the size of the actually used filter kernel, $F_{max}xF_{max}$ is the size of the largest filter kernel that can be used with the particular implementation of the hardware accelerator, and $F_{min}xF_{min}$ is the size of the smallest filter kernel that can be used with the particular implementation of the hardware accelerator. NPMU is the number of parallel MAC units 15 in a MAC array 13 (see below).

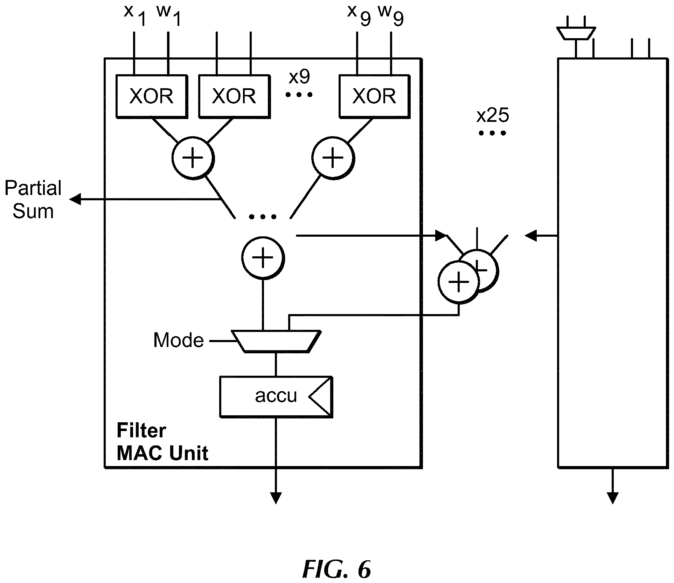

For instance, in an implementation where either a 3x3 filter kernel ($F_{min}xF_{min}$), or a 5x5 filter kernel ($F_{max}xF_{max}$) may be selected, a MAC array has 25 (NMPU) MAC units, which may all be used in case a 3x3 filter kernel is selected, or of which only 9 are used in case a 5x5 filter kernel is selected. If a FxF = 3x3 filter kernel is used in the convolution, each MAC array 13 is adapted for receiving $F_{min}xF_{min}xNPMU$ = 3x3xNPMU = 225 filter weights from the associated filter weights memory 14, and FxF = 3x3 activation inputs from the first memory 11. Each of the parallel MAC units 15 in the MAC array 13 is adapted for receiving 3X3 filter weights and 3x3 activations. Every MAC unit in the array sums 9 terms. If, however, a FxF = 5x5 filter kernel is used, each MAC array 13 is still adapted for receiving $F_{min}xF_{min}xNPMU$ = 225 filter weights, and FxF = 5x5 activation inputs. Each of the MAC units receives $F_{min}xF_{min}$ = 3x3 = 9 weights. Partial sums of multiple MAC units may be combined to create a 25 term sum. Partial sums can be passed to neighbouring units, as illustrated in FIG. 6.

Hereto, the first memory 11 is divided into a number of lanes, wherein the number of lanes is maximum equal to the number of pixels in a row of the input tensor. In the example illustrated in FIG. 3, the maximum number of lanes is 32. The lanes serve the horizontal filter stride of the convolution. If a filter kernel of 3x3 is used, and the first memory has a padding of 1 at each side thereof, 32 lanes are used in the convolution. If, however, a filter kernel of 5x5 is used, the first memory also having a padding of 1 at each side, only 30 lanes are used in the convolution. Each lane can be individually enabled, as needed, to support different input mappings. Spatial activation reuse is provided through this structure of the first memory 11, which brings out multiple overlapping windows of pixels to serve the 32 lanes. Each cycle the activation buffer shifts in new image data from the top, for instance, but not limited thereto, one row at a time, which provides the vertical stride of the convolution operation.

The MAC array 13 connected to the first lane, indicated lane #1 in FIG. 3 (further called the first MAC array), receives FxF, for instance 5x5 activations from the first memory 11, and corresponding 5x5 filter weights from the filter weights memory 14. At the same time, the MAC array connected to the second lane, indicated lane #2 in FIG. 3 (further called the first MAC array), receives another 5x5 activations from the first memory 11, and the same 5x5 filter weights. Per memory fetch from the filter weights memory, a set of filter weights are loaded. The set of filter weights is reused between all lanes (horizontal stride in space). The first MAC array convolves the received activations with the received filter weights, and simultaneously, the second MAC array convolves the received activations with the received filter weights. This also occurs simultaneously for the other MAC arrays connected to the other lanes. Each MAC array 13 of the processing unit 12 is adapted for processing the activation date of one lane. This way, it is as if the filter kernel is shifted horizontally over the activations as a sliding window, and values of a row of pixels of a channel of the output tensor are determined. Each MAC array provides, based on the received activation inputs and on the received filter weights a partial sum which is stored in a switchable accumulator. For instance, the first result delivered by MAC array #1 is stored in a first switchable accumulator of that MAC array #1, and will later on be used to determine the value of the first pixel of the output tensor.

Thereafter, in a next cycle, a new row of activation inputs is introduced into the first memory 11, for example from the top, resulting in all activations currently present in the first memory 11 being shifted down, for instance one row down, or shifted down the size of the filter, e.g. shifted 3 rows down when using a 3x3 filter. Shifting the activation inputs more that one row down can avoid the need of a pooling step later in the algorithm. Hereto, the first memory comprises, in the example illustrated in FIG. 3, 32 5-bit shift registers, or in general L Fmax-bit shift registers. This shifting of activations provides the vertical stride of the convolution process. The first MAC array now receives another set of FxF, e.g. 5x5, activations from the first memory 11 (these activations are stored in the first memory at the same locations in lane 1, but may have different values in view of the shifting of the rows), and can reuse the filter weights received earlier to do the convolution. Again, this occurs simultaneously for the different MAC arrays 13 of the processor unit 12. The results of this convolution (other partial sums) obtained by a particular MAC array are added to a second switchable accumulator of that MAC array. Each MAC array 13 is thus adapted for subsequently computing and storing, in different switchable accumulators, different partial sums, at subsequent cycles, while reusing the received filter weights.

Inside one MAC array 13, FxF, in the embodiment illustrated, 25 activations (5x5 window) are combined with $F_{min}$x$F_{min}$xNPMU, in the embodiment illustrated 225, filter weights. In the embodiment illustrated, the MAC arrays can either operate in 3x3 or 5x5 filter mode. In 3x3 mode, if more than 3x3 activations would be loaded, only the 9 activations corresponding to the correct window are used and the remaining activations are discarded. The 225 filter weights correspond to a set of 3x3 filters belonging to 25 different output channels. Inside the MAC array 13 there are a number NPMU of parallel MAC units 15, e.g. 25 (for instance equal to the number of output channels) parallel MAC units 15, which calculate 25 different partial sums ($C_O$ parallelism) using the same shared activation input. In 5x5 mode the situation changes: all 25 activations are used (5x5 window), and the 25 parallel MAC units inside one MAC array are reconfigured such that the same circuitry now forms 9 virtual units, which can be used to produce 9 different sums ($C_O$ parallelism). Every active MAC unit 15 in a MAC array 13 computes multiple parts of columns of an output tensor, multiplexed in time (one after the other).

Each MAC array 13 further comprises a plurality of accumulators (not illustrated) for making full sums from the partial sums made at subsequent cycles.

The number of compute cycles for obtaining a full sum equals R times the number of input channels $C_i$. The full sum is thus calculated over different cycles, whereby in every cycle a different partial sum is calculated. No reloading of the weights is required, and no reloading nor shuffling around of partial sums.

Inside one MAC unit, a multiplier and an accumulator are provided. The multiplier provides multiplications of activations and filter weights, and the accumulator sums the results of the multiplication - this complete operation is called a dot product operation. These sums (called the partial partial sums) are stored in the switchable accumulators.

In particularly advantageous embodiments, in view of algorithm optimizations for low-power operation, the dot products may be performed with binary operands, both regarding the activations and weights. This means that the multiplier may be replaced by much simpler and energy-efficient XNOR gates, and the adder may be replaced by a pop-count unit.

In this embodiment, inside one MAC unit 15 there are 9 XNOR gates 16, each performing the piecewise binary multiplication of the activations with the filter weights. The resulting 9-bit vector is then fed into an adder tree 17, which counts the number of 1s in the vector. The resulting 4-bit number is then fed into an accumulator 18, where the running sum over multiple compute cycles is held in a 15-bit register. The accumulator is switchable with a total of 8 registers, which are cycled through each cycle in order to be able to create 8 different sums at the same time, corresponding to 8 different output pixels in vertical direction of the output tensor. 32 different pixels are created spread over the different lanes, while 25 different output channels (in 3x3 mode) are created within a single MAC array 13. Overall this results in a tensor (slice) of size 8x32x25, which is held in the accumulators of one instance. In 5x5 mode, only some of the accumulators are used, and the correct 25-element sums (instead of 9-element sums) are created by bringing out partial sums of intermediate nodes of the adder tree from some MAC units and adding these partial results external within the MAC array. This allows for circuit reuse, using the same hardware to support both 3x3 and 5x5 filters efficiently.

A new set of filter weights is always loaded at the beginning of the basic computation kernel. The loop is repeated Ci times (number of input channels) with different sets of activations (input channels) and corresponding filter weights. After Ci iterations, i.e., Ci*10 cycles, RxLx(25*I) results are ready for read out in 3x3 mode; while in 5x5 mode after Ci*12 cycles RxLx(9*I) results are ready.

In particular embodiments of the present invention, as explained above, the hardware accelerator architecture in accordance with embodiments of the present invention, as illustrated in FIG. 3, has two main operation modes: with a 3x3 filter kernel, or with a 5x5 filter kernel. In the 3x3 mode, only 9 activations are used in each lane, and the filter weights are provided in 25 sets of 3x3. In the 5x5 mode, 25 activations are used in each lane, and the filter weights are provided in 9 sets of 5x5. The present invention, however, is not limited to these particular modes of operation.

Example

As an example case, a convolutional layer with 3x3 filters and 32x32x128 input activations is considered, mapping to a 32x32x128 output tensor. The situation is analysed where an architecture has I=2 convolutional instances (supporting a maximum of 50 output channels in parallel), where all L=32 lanes are activated, and all R=8 switchable accumulators are used. To produce the full 32x32x128 output, the input tensor is divided by 4 in R dimension, which results in 4 iterations each processing a 8x32x128 slice. Each 8x32x128 output slice is divided over time into 3 outputs of 8x32x50, where the hardware will not be fully utilized for creation of the last output. Now, to produce one output of size 8x32x50 the compute kernel loop is iterated over all Ci=128. With a pre-load of 2 cycles and a compute of 8 cycles this results in a total of 1280 cycles (incl. only 128 weight loads). This means in total per 8x32x128 slice 3*1280 = 3840 cycles are needed; and in total for the full output 4*3840 = 15360 cycles of processing time for the full convolutional layer.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments, but is limited by the scope of the claims.

**Claims**

1. A hardware accelerator architecture (10) for a convolutional neural network, comprising a first memory (11) for storing NxM activation inputs of an input tensor,
   a plurality of processor units (12) each comprising a plurality of Multiply ACcumulate (MAC) arrays (13) and a filter weights memory (14) associated with and common to the plurality of MAC arrays of one processor unit (12),

   each MAC array (13) being adapted for receiving a predetermined fraction (FxF) of the NxM activation inputs from the first memory (11), and filter weights from the associated filter weights memory (14),
   each MAC array (13) being adapted for subsequently computing and storing different partial sums, at subsequent cycles, while reusing the received filter weights, such that every MAC array (13) computes multiple parts of columns of an output tensor, multiplexed in time,
each MAC array (13) further comprising a plurality of accumulators (18) for making a plurality of full sums from the partial sums made at subsequent cycles.

2. The accelerator architecture according to claim 1, wherein the first memory (11) is divided into L lanes of activation inputs, each lane determining a predetermined fraction (FxF) of the NxM activation inputs, each lane defining a unique fraction of the NxM activation inputs, and wherein each MAC array (13) of a processor unit (12) is adapted for processing the activation data of one lane.

3. The accelerator architecture according to any of the previous claims, wherein the predetermined fraction (FxF) of the NxM activation units equals 3x3 or 5x5

4. The accelerator architecture according to any of the previous claims, wherein each MAC array (13) in a processor unit (12) can be individually enabled.

5. The accelerator architecture according to any of the previous claims, wherein the filter weights memory (14) of a processor unit (12) is configured for storing filter weights which belong to a selected set of output channels processed by that processor unit (12).

6. The accelerator architecture according to any of the previous claims, wherein a MAC array (13) comprises a plurality of parallel MAC units (15), each for calculating one of the different partial sums.

7. The accelerator architecture according to claim 6, wherein the number of parallel MAC units (15) is adapted to be depending on the size of the predetermined fraction (FxF) of the activation inputs in the calculation of the partial sums.

8. The accelerator architecture according to any of the previous claims, wherein a MAC unit (15) comprises a multiplication unit (MULT) for performing multiplication of activation inputs with filter weights.

9. The accelerator architecture according to claim 8 for a binary neural network, wherein the multiplication unit of a MAC unit (15) comprises XNOR gates (16) for performing piece-wise binary multiplication of activation inputs with filter weights.

10. The accelerator architecture according to any of claims 8 or 9, wherein a MAC unit (15) further comprises an adder for adding multiple inputs of the multiplication.

**11.** The accelerator architecture according to claim 10 for a binary neural network, wherein the adder of a MAC unit (15) is implemented as a circuit (17) for counting the number of ones in the multiplication result.

**12.** The accelerator architecture according to claim 11, wherein the circuit for counting the number of ones comprises an adder tree.

**13.** A method for operating an accelerator architecture of a convolutional neural network according to any of the previous claims, comprising

(a) fetching a first number of filter weights from a filter weights memory (14),
(b) fetching a second number (FxF) of data elements from a first memory (11) storing activation inputs of an input map, the second number being smaller than the first number,
(c) computing and storing, in the first MAC array, different partial sums, at subsequent cycles, by convoluting the second number of data elements with different subsets of the first number of filter weights, so as to compute multiple parts of columns of an output tensor, multiplexed in time, and
(d) accumulating the different partial sums made at subsequent cycles, to form a full sum.

**14.** A method according to claim 13, comprising iterating steps (b) to (d) a plurality of times, wherein loading a second number of data elements includes loading different sets of activation inputs.
(** as many times as there are input channels Ci; reuse of filter weights **)

**15.** A method according to claim 14, furthermore comprising reading out, after the plurality of iterations, results of the accumulating operations.

FIG. 1
(Prior Art)

**Many Filters**
$(C_o)$

Input Tensor

Output Tensor

**Many Output Channels**
$(C_o)$

*FIG. 2*

EP 3 674 982 A1

*FIG. 3*

EP 3 674 982 A1

FIG. 4

**FIG. 5**

*FIG. 6*

Europäisches
Patentamt

European
Patent Office

Office européen
des brevets

# EUROPEAN SEARCH REPORT

**Application Number**

EP 18 24 8028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2018 104609 U1 (GOOGLE LLC [US]) 29 November 2018 (2018-11-29) * the whole document * & US 2019/050717 A1 (TEMAM OLIVIER [FR] ET AL) 14 February 2019 (2019-02-14) * abstract; figures 1-5,7-9 * * paragraph [0002] - paragraph [0013] * * paragraph [0026] - paragraph [0033] * * paragraph [0036] - paragraph [0045] * * paragraph [0055] - paragraph [0117] * | 1-15 | INV. G06N3/04 G06N3/063 |
| A | Renzo Andri ET AL: "YodaNN: An Architecture for Ultra-Low Power Binary-Weight CNN Acceleration", <br>, <br>17 June 2016 (2016-06-17), XP055485030, Retrieved from the Internet: URL:https://arxiv.org/pdf/1606.05487.pdf [retrieved on 2019-06-14] * abstract; figures 1-9 * * page 1, left-hand column, line 1 - page 10, right-hand column, last line * | 1-15 | |
| A | MUHAMMAD ABDULLAH HANIF ET AL: "MPNA: A Massively-Parallel Neural Array Accelerator with Dataflow Optimization for Convolutional Neural Networks", ARXIV.ORG, CORNELL UNIVERSITY LIBRARY, 201 OLIN LIBRARY CORNELL UNIVERSITY ITHACA, NY 14853, 30 October 2018 (2018-10-30), XP081071219, * abstract; figures 2-4.7-11 * * section III * * section IV * * section V * | 1-15 | TECHNICAL FIELDS SEARCHED (IPC) <br>G06N |

-/--

The present search report has been drawn up for all claims

| Place of search | Date of completion of the search | Examiner |
|---|---|---|
| The Hague | 17 June 2019 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 24 8028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NORMAN P JOUPPI ET AL: "In-Datacenter Performance Analysis of a Tensor Processing Unit", PROCEEDINGS OF THE 44TH ANNUAL INTERNATIONAL SYMPOSIUM ON COMPUTER ARCHITECTURE , ISCA '17, ACM PRESS, NEW YORK, NEW YORK, USA, 24 June 2017 (2017-06-24), pages 1-12, XP058369087, DOI: 10.1145/3079856.3080246 ISBN: 978-1-4503-4892-8 * abstract; figures 1,4 * * page 2, right-hand column, line 1 - page 5, left-hand column, last line * | 1-15 | |
| A | LI JIAJUN ET AL: "SmartShuttle: Optimizing off-chip memory accesses for deep learning accelerators", 2018 DESIGN, AUTOMATION & TEST IN EUROPE CONFERENCE & EXHIBITION (DATE), EDAA, 19 March 2018 (2018-03-19), pages 343-348, XP033333924, DOI: 10.23919/DATE.2018.8342033 [retrieved on 2018-04-19] * abstract; figures 1-5 * * page 343, left-hand column, line 1 - page 346, right-hand column, last line * | 1-15 | TECHNICAL FIELDS SEARCHED (IPC) |
| A | WO 2018/026560 A1 (XILINX INC [US]) 8 February 2018 (2018-02-08) * abstract; figures 2-5 * * page 1, line 1 - page 2, last line * * page 4, line 1 - page 10, line 2 * | 1-15 | |

-/--

The present search report has been drawn up for all claims

| Place of search | Date of completion of the search | Examiner |
|---|---|---|
| The Hague | 17 June 2019 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/341495 A1 (CULURCIELLO EUGENIO [US] ET AL) 29 November 2018 (2018-11-29) <br> * abstract; figures 1,3 * <br> * paragraph [0001] - paragraph [0011] * <br> * paragraph [0028] - paragraph [0063] * <br> ----- | 1-15 | |
| A | CN 107 657 581 A (NAT UNIV DEFENSE TECHNOLOGY PLA) 2 February 2018 (2018-02-02) <br> * abstract; figures 1-4 * <br> * paragraph [0001] - paragraph [0036] * <br> * paragraph [0043] - paragraph [0089] * <br> ----- | 1-15 | |

TECHNICAL FIELDS
SEARCHED      (IPC)

The present search report has been drawn up for all claims

| Place of search | Date of completion of the search | Examiner |
|---|---|---|
| The Hague | 17 June 2019 | Totir, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 24 8028

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2019

| Patent document cited in search report | Publication date | Patent family member(s) | Publication date |
|---|---|---|---|
| DE 202018104609 U1 | 29-11-2018 | CN 109389214 A<br>DE 102018119513 A1<br>DE 202018104609 U1<br>GB 2568776 A<br>TW 201911140 A<br>US 2019050717 A1<br>WO 2019032808 A1 | 26-02-2019<br>14-02-2019<br>29-11-2018<br>29-05-2019<br>16-03-2019<br>14-02-2019<br>14-02-2019 |
| WO 2018026560 A1 | 08-02-2018 | CN 109804385 A<br>EP 3494521 A1<br>KR 20190035856 A<br>US 2018039886 A1<br>WO 2018026560 A1 | 24-05-2019<br>12-06-2019<br>03-04-2019<br>08-02-2018<br>08-02-2018 |
| US 2018341495 A1 | 29-11-2018 | NONE | |
| CN 107657581 A | 02-02-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KRIZHEVSKY et al.** ImageNet Classification with Deep Convolutional Neural Networks. *NIPS,* 2012

- **V. SZE ; Y. CHEN ; T. YANG ; J. S. EMER.** Efficient Processing of Deep Neural Networks: A Tutorial and Survey. *Proceedings of the IEEE,* December 2017, vol. 105 (12), 2295-2329